# EUROPEAN PATENT APPLICATION

(11) **EP 1 557 252 A1**
(43) Date of publication of application: **27.07.2005**
(21) Application number: 05000803.6
(22) Date of filing: 17.01.2005
(51) Int. Cl.: B29C 45/14, B65D 1/02, B65D 41/00

(54) **A method of producing anti-counterfeiting markings on products and anti-counterfeiting products manufactured by the method**

(30) Priority: 20.01.2004 CN 04100436
(71) Applicant: Ho, Alfred Au Kit, Kwun Tong Kowloon (HK)
(72) Inventor: Ho, Alfred Au Kit, Kwun Tong Kowloon (HK)
(74) Representative: Erbe, Claudia, Dr.

(57) **Abstract**

The present invention discloses a method of producing anti-counterfeiting markings on products by applying the in-mold decoration and holography or similar technique. Specially designed mold for in-mold decoration is used. A die plate (6) is placed in between the male and female dies (5, 8). The female die (8) is equipped with a film feeding device (7). When the male and female dies (5, 8) are coupled, the hologram or other anti-counterfeiting marking on the film is molded onto the surface of the product. The anti-counterfeiting marking and the product form one unity. According to the shape as set by the female die (8), the anti-counterfeiting marking on the surface of the product can be in different shape such as uneven, plane or curved. The present invention increases the difficulties and costs of counterfeiting and eradicates the illegal acts of the infringers effectively.

## Description

### Technical Field

The present invention relates to a method of producing anti-counterfeiting products and the products manufactured, and more particularly pertains to a method in which in-mold decoration and holography or similar technique are applied simultaneously to produce anti-counterfeiting markings on products. The anti-counterfeiting products manufactured include the products themselves, their packaging or decoration.

### Background Art

Illegal traders use without authorization packaging or decoration which are identical or similar to that of well-known products attempting to confuse or mislead consumers to mistakenly purchase the counterfeit products. Such acts substantially damage the economic interests of the owners of the well-known products. If the marketplace is flooded with counterfeit products, the economic value of the well-known products will be affected in the long run. In the circumstances of earning reducing profits, the owners of the well-known products reduce investments in scientific research, production facilities and the like. Further, investors are hesitant to make new capital investments or introduce new technologies in places which are flooded with counterfeit products, and this hinders technological and economic developments.

From the viewpoint of the consumers, mistaken purchases of counterfeit products for well-known products are unworthy on one hand and induce worries about the quality of the counterfeit products on the other, especially those for human use which become a cause of anxiety about their negative impacts on health. Some consumers simply dispose of the counterfeit products, but this leads to monetary losses. Even further, some consumers do not waste the purchased counterfeit products by continuing using the products themselves. If substandard counterfeit products are consumed, the consequences may be very significant. There were cases that consumers died of taking counterfeit medicines or wine.

At present, there are various anti-counterfeiting techniques available in the marketplace to protect the rights and interests of consumers and investors. Holographic anti-counterfeiting markings are the most commonly used technique for luxurious consumer goods. The method of producing a holographic anti-counterfeiting marking is by emitting two or more coherent beams of radiation to the surface of an object to create refraction and reflection and to form diffraction wave patterns on a photographic plate or film by interference effect, thus producing the origin image of the object and its three-dimensional image as well as a serious of dynamic iridescent hues of light spectrum.

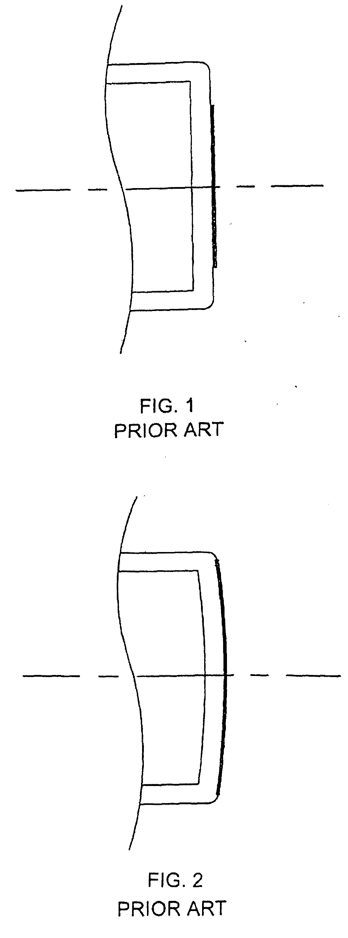

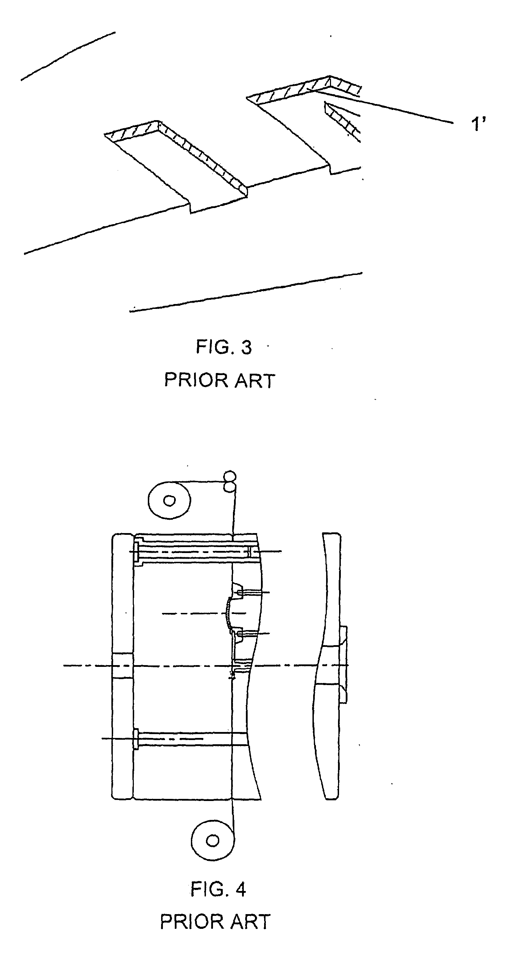

For the sake of convenience, holograms are usually produced on adhesive labels or hot stamping foils so that they can be easily adhered or hot stamped onto consumer goods. However, since such anti-counterfeiting method is a post-manufacturing process, infringers can remove holographic anti-counterfeiting markings from genuine goods or steal the holographic anti-counterfeiting adhesive labels or hot stamping foils, and then attach them onto their counterfeit products. Infringers can also forge the holographic anti-counterfeiting markings and attach them onto their counterfeit products, and consumers are difficult to distinguish between the genuine and the forged holographic anti-counterfeiting markings. Moreover, the existing holographic anti-counterfeiting markings can only be attached onto smooth surfaces as shown in FIG. 1. If the product surface is not smooth, it will be difficult to attach securely. If holographic anti-counterfeiting markings are attached onto products by hot stamping, the product surface will have to face to the hot stamping machine vertically at 90 degrees angle or at substantially 90 degrees angle. As shown in FIG. 2, the hot stamping machine can only attach holographic anti-counterfeiting hot stamping foil onto a smooth surface as well. As illustrated in FIG. 3, if the product surface is rough and irregular, the holographic hot stamping foil cannot cover the whole surface completely and there will be no hologram in the position where the ridge and the groove of the product surface connect 1'. The hologram cannot form one unity and appears to be broken which affects consumers' confidence in its anti-counterfeiting function. For this reason, the anti-counterfeiting effect of the existing holographic anti-counterfeiting markings remains to be not satisfactory. There are other similar anti-counterfeiting techniques in the marketplace, but like the holographic anti-counterfeiting markings, the anti-counterfeiting effect is still not satisfactory.

In-mold decoration is a process in which both injection molding and surface decoration of a part are completed at the same time. In general, the desired pattern is first printed, evaporated or otherwise disposed onto a plastic film or foil roll. Then, the plastic film or foil is placed in between the male die and the female die. When the dies are coupled, the molten plastic material is poured into the mold cavity. After the molten plastic material is solidified, a part is then molded with the pattern on it in one unity.

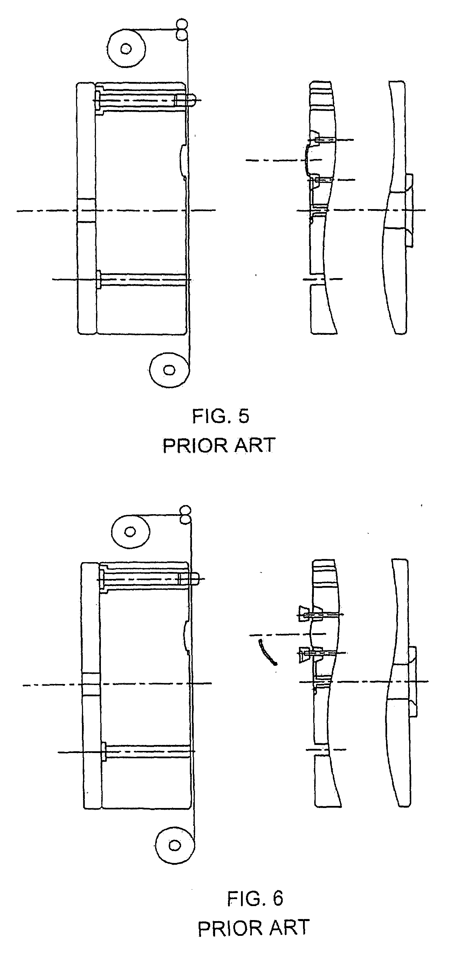

As shown in FIGS. 4 to 6, the conventional in-mold decoration, however, can only decorate the surface of the whole plastic part and cannot decorate the partial surface of the part. Further, when the conventional in-mold decoration is applied to products such as bottle caps, as bottle caps and the like have to be connected to the bottles, their shape is generally slender and their height mostly exceeds the extension limit of the plastic film or foil. Since the flattened plastic film or foil is pushed towards the female die by the male die during molding, if the depth of the female die is too high, the plastic film or foil will be broken by over-stretching, and so the plastic film or foil will fail to cover the bottle cap surface.

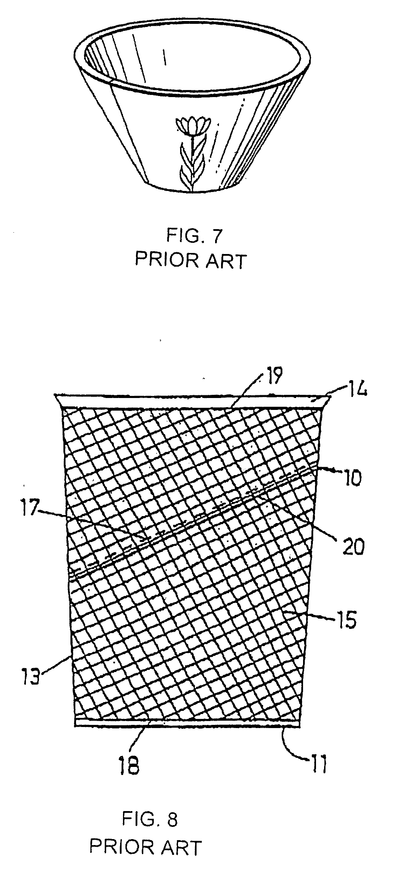

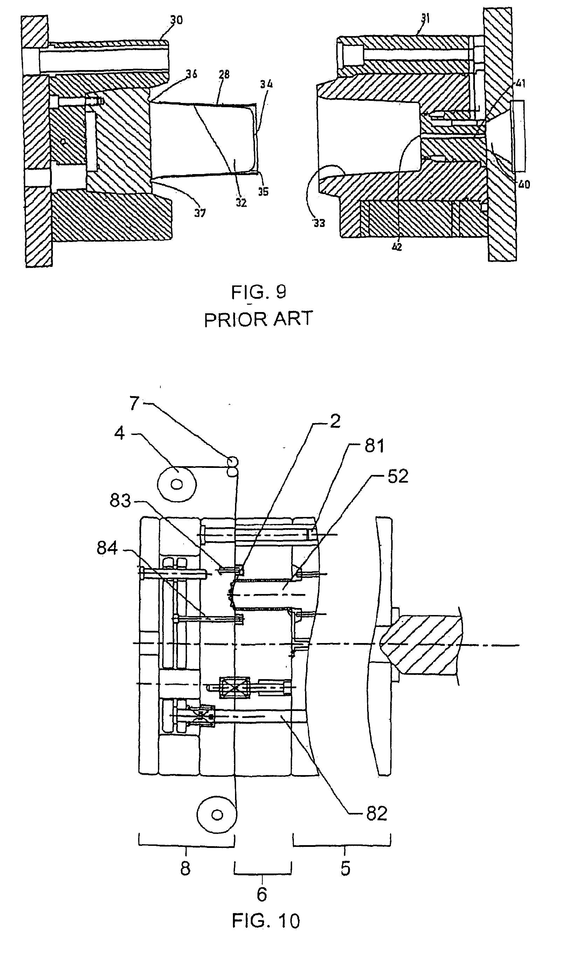

In regard to products such as bottle caps having bottle connecting structure, U.S. Patent No. 3,101,994 provides a method of applying textile fiber printed with patterns onto the surface of an elongated part by way of in-mold decoration for aesthetic decorative purposes, and the finished product is shown in FIG.7. International Application No. PCT/IL/97/00043 also discloses a method of wrapping the bottle cap with soft cloth, placing the bottle cap in between the male die and the female die, injecting molten plastic material into the cavity after the dies are coupled, the bottle cap is molded with the soft cloth in one unity after the plastic material is solidified. The finished product is also for aesthetic decorative purposes as shown in FIG. 8. The mold for production is shown in FIG. 9. In comparison with the quality of printing holograms on textile fiber or soft cloth, better visual effect can be achieved by printing holograms on plastic film or foil. However, according to U.S. Patent No. 3,101,994 or International Application No. PCT/IL/97/00043, if plastic film or foil is used in place of textile fiber or soft cloth, the plastic film or foil will be broken in between the male die and the female die owing to its lack of tensility. Therefore, the prior art is unable to produce an anti-counterfeiting product in slender shape with its partial surface covered with hologram.

### Disclosure of the Invention

In view of the aforesaid disadvantages now present in the prior art, the present invention provides a method of producing anti-counterfeiting markings on products by combining in-mold decoration and holography or similar technique. The present invention utilizes a specially designed mold for in-mold decoration, in which a die plate is added in between the male die and the female die and the female die is equipped with a film feeding device. When the dies are coupled, the hologram or other anti-counterfeiting marking on the plastic film or foil is transferred and molded onto the product surface, forming an anti-counterfeiting product with the anti-counterfeiting marking in one unity. According to the pre-set desired shape of the female die, the anti-counterfeiting marking on the surface of the product can be made into different shapes such as uneven, plane or curved ones.

To attain this, the present invention provides a method of producing anti-counterfeiting products, comprising the steps of:
- preparing anti-counterfeiting markings by means of holography or similar technique on a roll of decoration film made of plastic film with multi-layer coatings;
- making available a mold for in-mold decoration, which comprises a male die, a female die and a die plate in between; the male die has a protruding part which is incorporated as part of the male die and the shape of the protruding part is in a desired tubular shape which forms the shape of the molded products; the die plate has a punch hole in the middle in shape and position corresponding to the shape and position of the protruding part of the male die, and the front end of the protruding part can jut out from the punch hole of the die plate, and the die plate is movably connected to the female die by sliding pins, and there is a film feeding device disposed in between the die plate and the female die, and there is a plurality of inserting slots surrounding the punch hole for insertion of corresponding fixing pins on the female die; the surface of the female die facing the punch hole of the die plate is in a desired uneven, plane or curved shape;
- mounting the roll of decoration film on the film feeding device and positioning an anti-counterfeiting marking in between the female die and the punch hole of the die plate;
- fixing the position of the anti-counterfeiting marking in between the female die and the punch hole of the die plate by adjusting the sliding pins and pulling out the fixing pins;
- inserting the protruding part of the male die into the punch hole of the die plate until the front end of the protruding part juts out from the punch hole nearly touching the anti-counterfeiting marking and facing the surface of the female die in the desired shape;
- starting the injection molding to produce a molded product, which is formed in the shape following that of the protruding part of the male die with the anti-counterfeiting marking molded on it as its integral part and the surface of the anti-counterfeiting marking is in the shape following that of the corresponding surface of the female die.

The decoration film is plastic film or foil. It has anti-counterfeiting markings or holograms.

The product has a certain part of its uneven, plane or curved surface molded with the anti-counterfeiting marking or the hologram, which forms one unity with the product.

The product can be a container for or a part of another product. It can be a bottle for another product or a sealing cap for the bottle of another product.

The product is disposable and is non-reusable after being opened.

The operation principle of the method of producing anti-counterfeiting products is that: First, it is to prepare anti-counterfeiting markings by means of holography or similar technique on a roll of decoration film made of plastic film with multi-layer coatings. Next, the decoration film is mounted onto the film feeding device. After the decoration film is fed in between the die plate and the female die, it can be fixed in position by inserting the fixing pins into the inserting slots. Alternatively, the decoration film can be manually or automatically fed and positioned. The decoration film is disposed in front of the surface of the female die which is preset to be in the desired uneven, plane or curved shape by pressing. Thereafter, the dies are coupled and molten pressurized plastic material is injected into the male die through the injection opening. The front end of the protruding part of the male die moves near the section of the decoration film in front of the female die. The section of the decoration film is integrated with the molten plastic material, and the hologram or similar anti-counterfeiting marking is then removed and permanently adhered to the surface of the molded part. According to the shape of the female die, the surface may be molded to form uneven, plane or curved shape. After the molten plastic material is solidified and the mold is open, a molded anti-counterfeiting product is completed with the hologram or similar anti-counterfeiting marking molded on it as its integral part and the surface of the anti-counterfeiting marking molded to form uneven, plane or curved shape following that of the female die. The plastic film is automatically detached and removed by the film feeding device. The film feeding device adjusts the film position for the next production cycle. The decoration film can also be changed manually.

It is an object of the present invention to produce anti-counterfeiting products molded with holograms or other anti-counterfeiting markings on surface which are difficult to be forged and easy to be distinguished between the genuine and the counterfeit products.

It is another object of the present invention to produce anti-counterfeiting products in slender shape with surface fully or partially molded with holograms or other anti-counterfeiting markings.

It is a further object of the present invention to provide a method of producing anti-counterfeiting markings on products, which requires both the special mold and the decoration film for production and which increases the difficulties and costs of forging, and thus effectively eradicating illegal acts of infringers of forging or stealing holograms or similar anti-counterfeiting markings.

It is an even further object of the present invention to provide anti-counterfeiting products which are non-reusable, especially suitable for luxurious consumer goods or goods to be orally taken for human use, such as containers or bottle caps of medicines or wine and so forth.

An even further object of the present invention is to provide a method of producing anti-counterfeiting markings on products in one process which is susceptible of shorter production time and lower cost of manufacture, and which is susceptible of mass production.

### Brief Description of Drawings

FIG. 1 is a cross-sectional view of an existing holographic anti-counterfeiting adhesive label.
FIG. 2 is a cross-sectional view of an existing holographic anti-counterfeiting hot stamping foil.
FIG. 3 is a schematic drawing illustrating the existing holographic anti-counterfeiting hot stamping foil on uneven surface.
FIG. 4 is a drawing illustrating the injection molding process of the existing mold for in-mold decoration.
FIG. 5 is a drawing illustrating the reset process of the mold plate of the existing mold for in-mold decoration.
FIG. 6 is a drawing illustrating the completion of molding process of the existing mold for in-mold decoration.
FIG. 7 is a drawing showing an end-product manufactured according to U.S. Patent No. 3,101,994.
FIG. 8 is a drawing showing an end-product manufactured according to International Application No. PCT/IL/97/00043.
FIG. 9 is a drawing showing the production mold according to International Application No. PCT/IL/97/00043.
FIG. 10 is a schematic drawing illustrating the injection molding process of the present invention.
FIG. 11 is a schematic drawing illustrating the process of the male die releasing from the female die of the present invention.
FIG. 12 is a schematic drawing illustrating the completely released male die of the present invention.
FIG. 13 is a schematic drawing illustrating the completion of molding process of the present invention.
FIG. 14 is a cross-sectional view of the anti-counterfeiting product manufactured of the present invention.
FIG. 15 is a perspective view of the anti-counterfeiting product manufactured of the present invention.

### Best Mode for Carrying out the Invention

The present invention will be described in detail below with reference to the drawings.

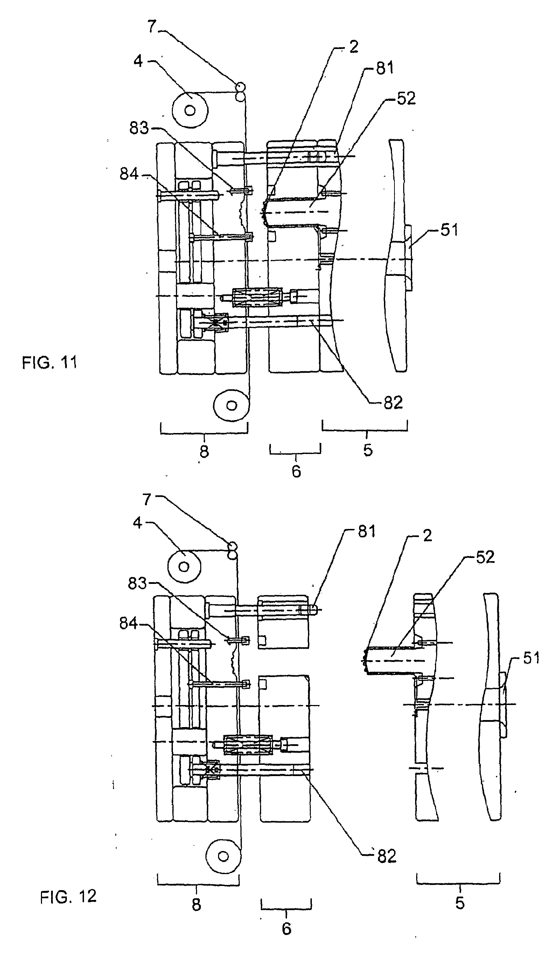

As illustrated in FIGS. 10 to 13, the present invention utilizes a mold for in-mold decoration to mold anti-counterfeiting markings 2 on the surface of the molded products. The method is to place anti-counterfeiting markings 2 by means of holography or similar technique on a roll of decoration foil 4. The decoration foil 4 is made of plastic film with multi-layer coatings. The decoration foil 4 is mounted on the foil feeding device 7 on the mold for in-mold decoration.

The mold for in-mold decoration generally comprises a male die 5, a female die 8 and a die plate 6 in between the male die 5 and the female die 8. The die plate 6 is movably connected to the female die 8 by sliding pins 81, 82. The male die 5 has a protruding part 52, the shape of which forms the shape of the molded product and the protruding part 52 is incorporated as part of the male die 5. The die plate 6 has a punch hole in the middle in shape and position corresponding to the shape and position of the protruding part 52 of the male die 5, and the protruding part 52 of the male die 5 can movably be inserted into the die plate 6. When it is inserted into the punch hole, the front end of the protruding part 52 can jut out from the punch hole of the die plate 6. The contact surface of the female die 8 with the decoration foil 4 is uneven and the foil feeding device 7 is installed on the side facing the die plate 6. The decoration foil 4 is mounted on the foil feeding device 7 and positioned the decoration foil 4 in between the female die 8 and the die plate 6, and then fixed in position by fixing pins 83, 84 or by mounting and fixing the decoration foil 4 manually. There are two inserting slots on the die plate 6 in position corresponding to the fixing pins 83, 84 for insertion of the fixing pins 83, 84. The inserting slots are disposed surrounding the punch hole. The decoration foil 4 is disposed in front of the uneven surface of the female die 8. Thereafter, the dies are coupled, the protruding part 52 of the male die 5 passes through the punch hole of the die plate 6 for shaping of the molded product. Molten pressurized plastic material is injected into the protruding part 52 of the male die 5 through the injection opening 51. The front end of the protruding part 52 of the male die 5 moves near the section of the decoration foil 4 in between the female die 8 and the die plate 6. The section of the decoration foil 4 is integrated with the molten plastic material, and its surface forms uneven shape by the female die 8, and the hologram on the decoration foil 4 is then removed and permanently adhered to the surface of the molded part. After the molten plastic material is solidified and the mold is open, a molded anti-counterfeiting sealing cap 1 is completed with the holographic anti-counterfeiting marking 2 molded on it as its integral part and the surface of the marking molded to form uneven shape. The plastic film is automatically detached and removed by the foil feeding device 7. The foil feeding device 7 adjusts the foil position for the next production cycle. The decoration foil 4 can also be changed manually.

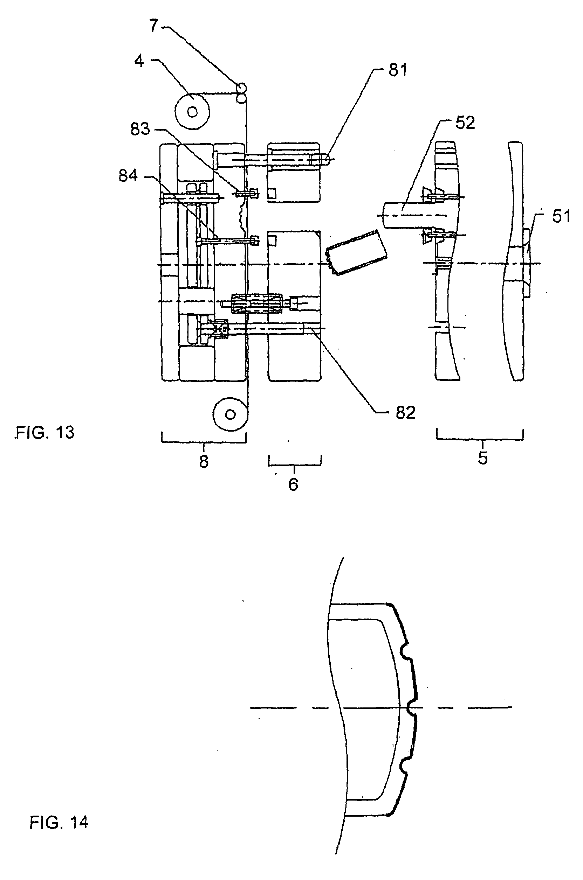

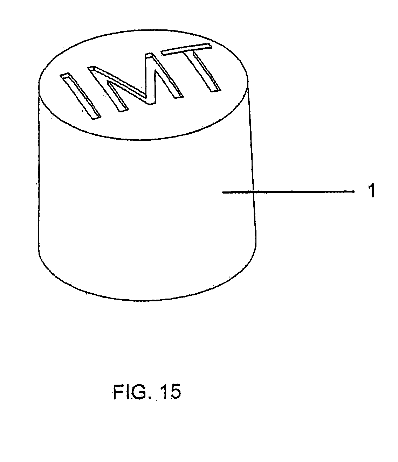

As shown in FIGS. 14 and 15, the anti-counterfeiting product is an anti-counterfeiting sealing cap 1. There is an uneven holographic anti-counterfeiting marking 2 on the top of the anti-counterfeiting sealing cap 1 forming one unity. The anti-counterfeiting sealing cap 1 is applicable to goods in bottle shape, especially for luxurious consumer goods or goods to be orally taken for human use, such as medicines or wine and so forth for anti-counterfeiting purposes. It is designed to be disposable and non-reusable after being opened. Even if it is reused, consumers can easily distinguish the difference as the anti-counterfeiting sealing cap 1 is broken or deformed, thus ensuring that the anti-counterfeiting sealing cap 1 cannot be reused. Other disposable or non-usable configuration can also be applicable and detailed explanation is hereby omitted. Industrial Applicability

The present invention provides a method of producing anti-counterfeiting markings on products and anti-counterfeiting products manufactured, which requires both the special mold and the decoration film for production, thus increasing the difficulties and costs of forging and effectively eradicating illegal acts of infringers of forging or stealing holograms or similar anti-counterfeiting markings. Further, the present invention provides a method of producing anti-counterfeiting markings on products, which is susceptible of shorter production time and lower cost of manufacture, and which is susceptible of mass production.

## Claims

1. A method of producing anti-counterfeiting products, comprising the steps of: preparing anti-counterfeiting markings by means of holography or similar technique on a roll of decoration film made of plastic film with multi-layer coatings;
making available a mold for in-mold decoration, which comprises a male die, a female die and a die plate in between; the male die has a protruding part which is incorporated as part of the male die and the shape of the protruding part is in a desired tubular shape which forms the shape of the molded products; the die plate has a punch hole in the middle in shape and position corresponding to the shape and position of the protruding part of the male die, and the front end of the protruding part can jut out from the punch hole of the die plate, and the die plate is movably connected to the female die by sliding pins, and there is a film feeding device disposed in between the die plate and the female die, and there is a plurality of inserting slots surrounding the punch hole for insertion of corresponding fixing pins on the female die; the surface of the female die facing the punch hole of the die plate is in a desired uneven, plane or curved shape; mounting the roll of decoration film on the feeding device and positioning an anti-counterfeiting marking in between the female die and the punch hole of the die plate;
fixing the position of the anti-counterfeiting marking in between the female die and the punch hole of the die plate by adjusting the sliding pins and pulling out the fixing pins;
inserting the protruding part of the male die into the punch hole of the die plate until the front end of the protruding part juts out from the punch hole nearly touching the anti-counterfeiting marking and facing the surface of the female die in the desired shape;
starting the injection molding to produce a molded product, which is formed in the shape following that of the protruding part of the male die with the anti-counterfeiting marking molded on it as its integral part and the surface of the anti-counterfeiting marking is in the shape following that of the corresponding surface of the female die.

2. The method of producing anti-counterfeiting products according to Claim 1, wherein the decoration film is plastic film or foil.

3. The method of producing anti-counterfeiting products according to Claim 1, wherein the decoration film has anti-counterfeiting markings.

4. The method of producing anti-counterfeiting products according to Claim 1, wherein the decoration film has holograms.

5. Anti-counterfeiting products produced by the method according to Claim 1 or 2 or 3, wherein certain part of the uneven, plane or curved surface of the product is molded with the anti-counterfeiting marking, which forms one unity with the product.

6. Anti-counterfeiting products produced by the method according to Claim 1 or 2 or 4, wherein certain part of the uneven, plane or curved surface of the product is molded with the hologram, which forms one unity with the product.

7. Anti-counterfeiting products produced by the method according to Claim 1 or 2 or 3 or 4, wherein the product can be a container for or a part of another product.

8. Anti-counterfeiting products produced by the method according to Claim 1 or 2 or 3 or 4, wherein the product can be a bottle for another product.

9. Anti-counterfeiting products produced by the method according to Claim 1 or 2 or 3 or 4, wherein the product can be a sealing cap for the bottle of another product.

10. Anti-counterfeiting products produced by the method according to Claim 1 or 2 or 3 or 4, wherein the product is disposable and is non-reusable after being opened.
